# EUROPEAN PATENT SPECIFICATION

(11) **EP 0 595 588 B1**
(45) Date of publication and mention of the grant of the patent: **21.01.1998**
(21) Application number: 93308501.1
(22) Date of filing: 26.10.1993
(51) Int. Cl.: B29C 45/14, B29C 70/00

(54) **Set of two dies for a crimping tool**
Matrizensatz für ein Krimpwerkzeug
Dispositif pour former une bordure sur un récipient tubulaire

(30) Priority: 30.10.1992 AU 5620/92
(43) Date of publication of application: 04.05.1994
(73) Proprietor: IMPACT INTERNATIONAL PTY. LTD., Smithfield New South Wales 2164 (AU)
(72) Inventor: Lajovic, Dusan Sava c/o Impact Intern Pty.Ltd, New South Wales 2164 (AU)
(74) Representative: Godwin, Edgar James

(56) References cited:
- DE-C- 4 009 661
- FR-A- 2 552 703
- GB-A- 2 171 048
- GB-A- 2 190 323

## Description

The present invention relates to an apparatus for forming a rim on a tubular body.

The invention has been developed primarily for use in the formation of rims on tubular containers, and will be described hereinafter with reference to this application. However, it will be appreciated that the invention is not limited to this particular field of use, and may be used to form a rim on any kind of tube.

It is often desirable to form rims on tubular containers to facilitate the subsequent attachment of bases, lids, caps, and the like. Sometimes, no additional attachment is required, and a rim is provided simply to protect or dress the marginal edge of the container.

Various techniques are known for forming rims on tubular containers. For example, it is known to mould plastic rims, and then subsequently to secure the rims to the containers in a separate attachment operation. However, this is unsatisfactory, particularly in high rate production applications, because of the relatively large number of process steps involved.

It is also known to mould plastic rims directly onto the tubes. However, this typically involves the use of relatively complex and expensive die assemblies and relatively high powered rams and clamps to resist the jacking forces generated by the injection of molten plastic into the die cavities. Such devices therefore tend to be excessively sophisticated and expensive.

GB-A-2190323 discloses apparatus for moulding a container mouth section onto one end of a tube. The apparatus comprising a die block, a plate resiliently supported above the die block, an inner core block extending intermediate the die block and the plate, and complementary outer core blocks slidably disposed around the inner block intermediate the die block and the plate. Wedge blocks are respectively disposed intermediate the outer core blocks and the plate. Clamping means are progressively operable to move the outer core blocks together into the closed position, thereby clamping the tube against the inner core block such that an exposed end of the tube extends into the die cavity formed by the closed outer core blocks and the inner core block. The apparatus further includes means to inject hot thermoplastic material into the die cavity, thereby forming a container mouth bonded to the end of the tube.

GB-A-2 171 048 dicloses apparatus for forming a rim on a tube, in accordance with the pre-characterising part of claim 1.

It is an object of the present invention to provide an apparatus which overcomes or substantially ameliorates at least some of the deficiencies of the prior art.

According to the present invention as set forth in claim 1, a locking plate is supported in fixed space apart relationship with respect to the die block, clamping means being operable to drive the wedges of wedge blocks between the locking plate and respective outer core blocks to wedge the outer core blocks against the die block in the closed position such that the die block and core blocks together in the closed position form the die cavity.

Preferably, resilient compression elements are disposed intermediate the outer core blocks and the respective wedge blocks and the clamping means are operable directly on the wedge blocks.

Preferably also, the core blocks are connected to the respective wedge blocks by shoulder screws which accommodate the relative lost motion of the core blocks during the wedging phase and limit the maximum excursion of the wedge blocks away from the core blocks. In a release phase, it is preferred that the clamping means first release and retract the wedge blocks, which in turn drag the respective core blocks open by means of the shoulder screws following expansion of the resilient compression elements.

Preferably, the end of the tube remote from the die cavity incorporates a base, and the apparatus further includes a passage to direct pressurised air into the tube through the inner core block upon opening of the die to eject the tubular container.

An inner sleeve associated with the inner core block is preferably provided to support and locate the remote end of the tube.

In the preferred embodiment, the clamping means comprises two hydraulic actuators respectively disposed on opposite sides of the apparatus.

In this embodiment, the thermoplastic material is injected through a nozzle disposed on the inner periphery of the die cavity such that the plastic tends to provide an outwardly directed injection pressure on the exposed end of the tube. The outer core blocks preferably define an inwardly depending shoulder to provide radial support for the exposed end of the tube to resist deformation under the outwardly directed injection pressure.

A preferred embodiment of the invention will now be described, by way of example only, with reference to the accompanying drawings in which:-
Figure 1 is a cross sectional side elevation of a rim forming apparatus according to the invention;
Figure 2 is a front view of the apparatus shown in Figure 1 with the locking plate removed and one core block retracted for clarity;
Figure 3 is an enlarged sectional view of the die cavity and injection nozzle;

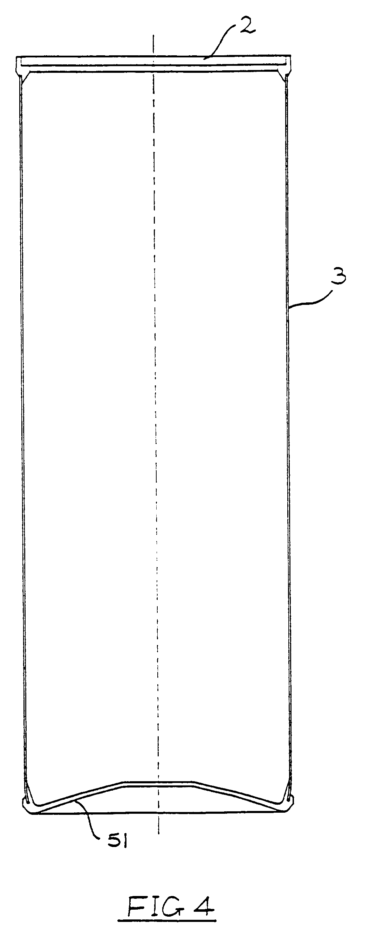

Figure 4 is a cross sectional side elevation showing a tubular container having a base at one end, and a rim formed at the other end in accordance with the invention; and

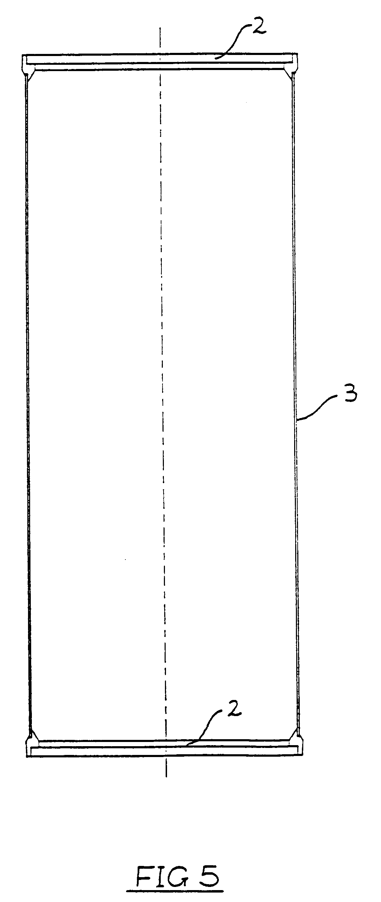

Figure 5 is a cross sectional side elevation similar to Figure 4 showing a tubular body with a rim formed on both ends.

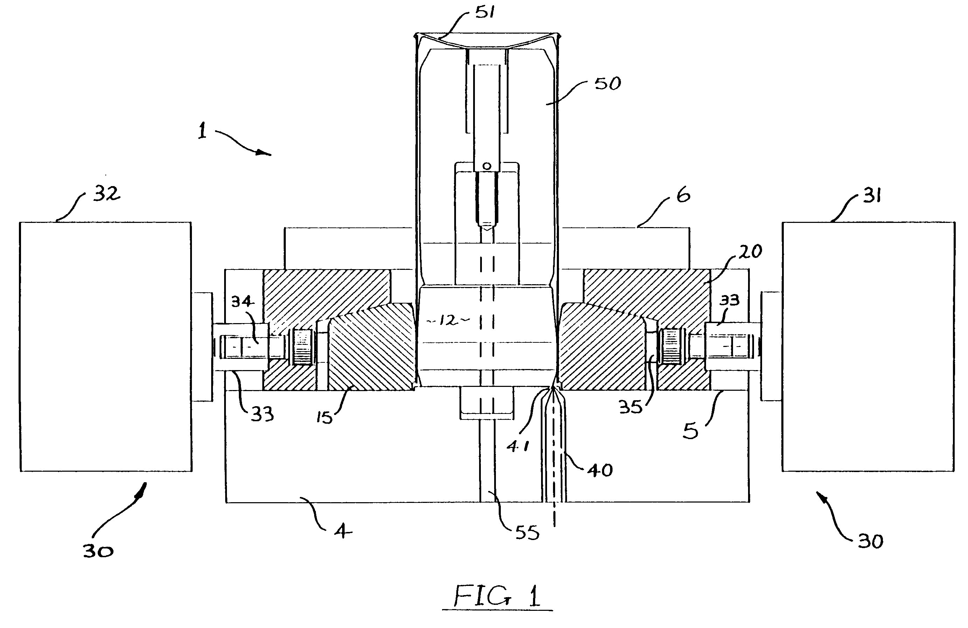

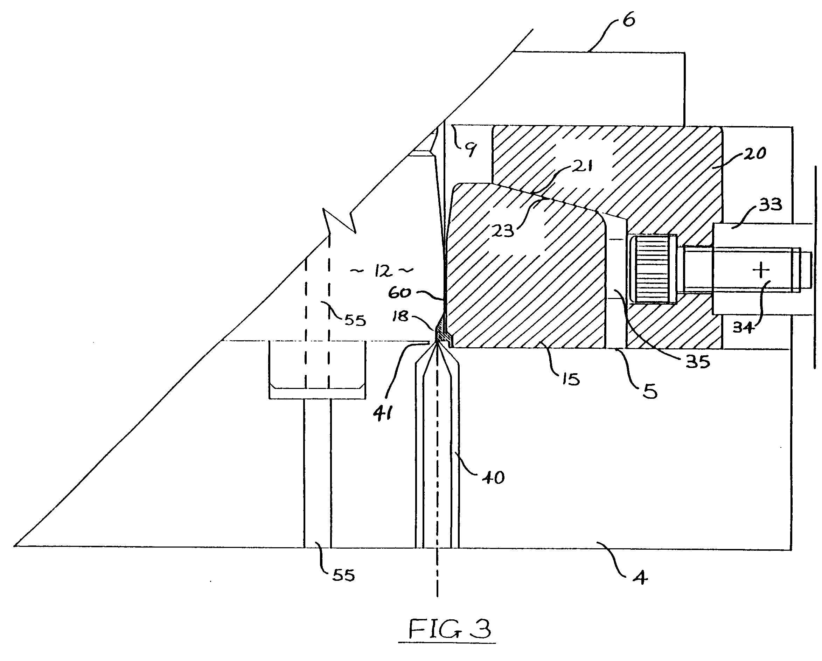

Referring to the drawings, wherein corresponding features are denoted by corresponding reference numerals, the invention provides an apparatus 1 for forming a rim 2 on a tubular container 3. The apparatus comprises a die block 4 defining a substantially flat operative surface 5. A locking plate 6 is supported in fixed spaced apart relationship with respect to the die block 4 by a series of spaced apart high tensile bolts 8. The locking plate 6 defines an operative surface 9 substantially parallel to the opposing surface 5 of the die block. An inner core block 12 extends fixedly from the die block 4 toward the locking plate. A pair of complementary outer core blocks 15 are slidably disposed around the inner core block 12 intermediate the die block 4 and locking plate 6. The outer core blocks 15 are adapted to slide across the operative surface 5 of the die block and together form complementary halves of an outer die corresponding generally in cross sectional configuration to the tube, which in the preferred embodiment is round in section. The die block 4, inner core block 12, and outer core blocks 15 together in a closed position form a die cavity 18, as best seen in Figures 1 and 3.

A pair of wedge blocks 20 are respectively disposed outwardly of the outer core blocks 15 and extend intermediate the core blocks and the locking plate 6. Each wedge block incorporates an inclined surface 21 disposed to engage a correspondingly inclined mating surface 23 on the respective core block.

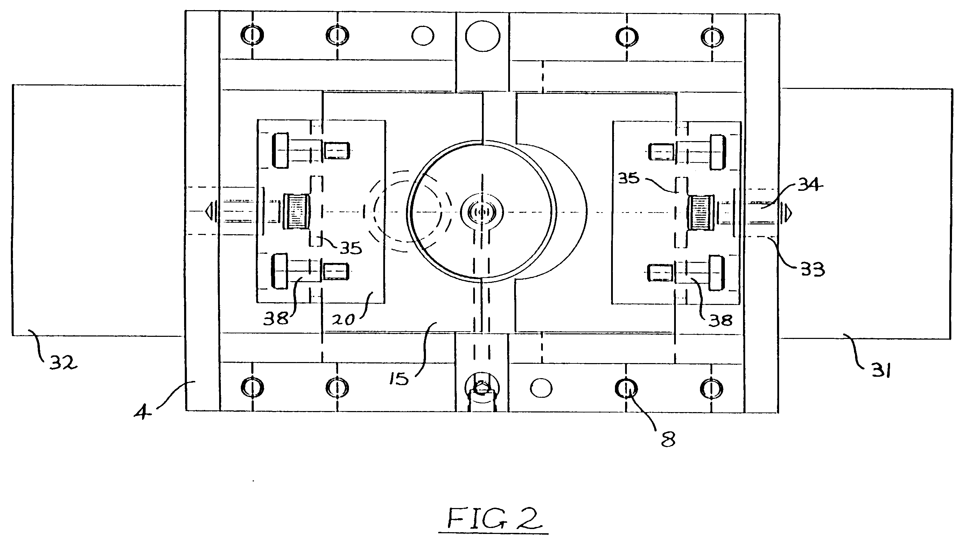

The apparatus further includes a symmetrically operating clamping assembly 30 comprising two opposed hydraulically actuable clamping cylinders 31 and 32. The clamping cylinders 31 and 32 incorporate actuating rods 33 bolted directly to the wedge blocks with bolts 34 to transfer the clamping forces directly to the wedge blocks. A resilient compression element 35 is disposed intermediate each outer core block 15 and the respective wedge block 20. The core blocks are connected to the respective wedge blocks by shoulder screws 38 (as best seen in Figure 2) which accommodate a predetermined degree of relative displacement. This arrangement provides a degree of "lost motion", but limits the maximum relative excursion between these components, as described in more detail below.

As best seen in Figure 3, injection means in the form of an injection screw and barrel assembly (not shown) are disposed to inject hot thermoplastic material into annular passage 40 in the die block, through nozzle 41, and into the die cavity 18.

An inner cylindrical boss 50 incorporating an ejector sleeve extends coaxially from the inner core block 12 to support and locate the end of the tube remote from the die block.

Turning now to describe the operation of the apparatus, the clamping cylinders 31 and 32 are initially retracted to separate the outer core blocks 15 and open the die, as shown in Figure 2. A tube is then placed over the boss 50 and the inner core block 12. In the present case, the tube is preformed with a base 51 and the boss 50 is specifically sized to locate the base so that the exposed end of the tube is located in predetermined relationship with respect to the die block.

With the tube in place, the clamping assembly 30 is actuated. Initial relative movement of the actuating rods 33 acting on the wedge blocks 20 is transferred to the outer core blocks 15 by the intermediate compression elements 35. In this initial die closing phase, the inclined surfaces 21 of the wedge blocks and the correspondingly inclined mating surfaces 23 of the core blocks are marginally separated by the compression elements. Similarly, during this phase a clearance space is maintained between the operative surface 9 of the locking plate and the wedge blocks so that no wedging action occurs. In this way, the outer core blocks 15 are progressively moved together across the die block and into the closed position, ultimately clamping the tube firmly against the inner core block 12 such that the exposed end of the tube extends into the die cavity. The amount by which the tube extends into the cavity is determined by the locating boss 50 and is preferably of the order of several millimetres. This action substantially closes and seals the die cavity.

With the die closed, further displacement of the clamping cylinder drives the wedge blocks toward the respective core blocks 15 by compression of the intermediate resilient elements 35. This relative "lost motion" is accommodated by shoulder screws 38, as best seen in Figure 2. During this locking phase, the wedge blocks are driven between the locking plate and the core blocks, to secure the core blocks against the die block 4.

With the die segments closed and locked, hot thermoplastic material is injected under pressure into passage 40, through nozzle 41 and into the die cavity 18 thereby forming a peripheral rim thermoplastically bonded to the exposed end of the tube. During this injection phase, it will be appreciated that the jacking forces on the outer core blocks generated by the injection of pressurised plastic into the void are effectively resisted by the wedge blocks and locking plate, with only a small force component being reacted by the clamping cylinder. It should also be noted that the plastic is injected at the inner periphery of the die cavity to provide an outwardly directed injection pressure on the exposed end of the tube. The outer core blocks 15 define an inwardly depending shoulder 60 to prevent deformation of the marginal edge of the tube under the injection pressure of the molten plastic.

Once the rim has been formed, the clamping cylinders begin to withdraw. Since the actuating rods 33 of the clamping cylinders act directly on the wedge blocks via bolts 34, the initial withdrawal releases the wedge blocks from locking engagement between the core blocks and locking plate which in turn permits the intermediate compression elements 35 to expand. Further retraction of the clamping cylinder and wedge blocks drags open the core blocks, once the interconnecting shoulder screws 38 abut their respective end stops.

With the die again in the open position as shown in Figure 2, pressurised air is directed into the container through air central ejection passage 55, thereby ejecting the container from the apparatus. The cycle can then be repeated.

Once the rim is formed, the tube and rim may be heated and reformed into varying cross sectional profiles such as square, triangular or the like if required, without the need for different die shapes.

It will be appreciated that this method and apparatus enables the formation of a rim on a tube without the need for a moving platern. Moreover, because most of the jacking forces are reacted by the wedge blocks and only a small component transferred to the clamping assembly, a relatively small clamping actuator can be used. These advantages combine to produce an apparatus which is considerably simpler, cheaper, more compact, and more efficient than comparable prior art devices.

Although the invention has been described with reference to a specific example, it will be appreciated by those skilled in the art that the invention may be embodied in many other forms.

## Claims

1. Apparatus for forming a rim (2) on a tube (3), the apparatus comprising a die block (4), a plate (6),an inner core block (12) extending intermediate the die block (4) and the plate (6), and injection means to inject hot thermoplastic material into a die cavity (18), thereby forming a peripheral rim (2) thermoplastically bonded to the exposed end of the tube (3), characterised in that the plate (6) is a locking plate supported in fixed space apart relationship with respect to the die block (4), complementary outer core blocks (15) are slidably disposed around the inner core block (12) intermediate the die block (4) and the plate (6), wedge blocks (20) are respectively disposed intermediate the outer core blocks (15) and the plate (6), and clamping means (30) are operable selectively and progressively to move the outer core blocks (15) together into a closed position thereby clamping the tube (3) against the inner core block (12) such that an exposed end of the tube (2) extends into the die cavity (18), which is delimited by the core blocks (12,15), the clamping means (30) being further operable to drive the wedges of the wedge blocks (20) between the locking plate (6) and the respective outer core blocks (15) to wedge the outer core blocks against the die block (4) in the closed position such that the die block (4) and core blocks (12,15) together in the closed position form the die cavity (18).

2. Apparatus according to claim 1, further including resilient compression elements (35) disposed intermediate the outer core blocks (15) and the respective wedge blocks (20).

3. Apparatus according to claim 1 or 2, wherein the clamping means (30) are operable directly on the wedge blocks (20).

4. Apparatus according to any preceding claim, wherein the outer core blocks (15) are connected to the respective wedge blocks (20) by connecting elements (38) which accommodate a degree of relative displacement of the wedge blocks (20) toward the core blocks (15) and limit the maximum relative displacement of the wedge blocks (20) away from the core blocks (15).

5. Apparatus according to claim 4, wherein the clamping means (30) are operable in a release phase firstly to release and retract the wedge blocks (20) and subsequently to retract the respective outer core blocks (15) by means of the connecting elements (38) at the point of maximum relative displacement.

6. Apparatus according to any preceding claim, for use with a tube (3) which incorporates a preformed base (51) remote from the die cavity (18), wherein the apparatus further includes a passage (55) to direct pressurised gas into the tube (3) through the inner core block (12) upon opening of the die to eject the tube (3) from the apparatus.

7. Apparatus according to any preceding claim, further including an inner sleeve (50) associated with the inner core block (12) to locate the remote end of the tube (3).

8. Apparatus according to any preceding claim, wherein the clamping means (30) comprises mutually opposed hydraulic actuators (31,32) disposed on opposite sides of the die and operable on the respective wedge blocks (20).

9. Apparatus according to any preceding claim, wherein the thermoplastic material is injectable through a nozzle (41) disposed on an inner periphery of the die cavity (18) such that the thermoplastic material tends to provide an outwardly directed injection pressure on the exposed end of the tube (3).

10. Apparatus according to claim 9, wherein the outer core blocks (15) together define an inwardly depending peripheral shoulder (60) to provide radial support for the exposed end of the tube (3) and thereby to resist deformation of the tube under the outwardly directed injection pressure.

11. Apparatus according to any preceding claim, wherein each wedge block (20) incorporates an inclined wedging surface (23) disposed to engage a correspondingly inclined mating surface (21) on the respective core block (15).

12. Apparatus according to claim 11, wherein the said inclined surfaces (21,23) are disposed such that the majority of jacking forces acting on the outer core blocks (15) by the injection of the thermoplastic material into the die cavity (18) are reacted by the locking plate (6), whereby only a relatively smaller force component is reacted by the clamping means (30).

13. Apparatus according to claim 2 or any claim dependent thereon, wherein the resilient compression elements (35) are disposed initially to drive the wedge blocks (20) out of clamping engagement with the respective outer core blocks (15) immediately upon release of the clamping means (30).

14. Apparatus according to any preceding claim, wherein the die block (4) and locking plate (6) define respective mutually opposing substantially parallel guide surfaces (5,9) along which the outer core blocks (15) and wedge blocks (20) respectively slide in response to operation of the clamping means (30).

## Patentansprüche

1. Gerät zum Bilden eines Randes (2) an einem Rohr (3) mit einem Gesenkblock (4), einer Platte (6), einem sich zwischen dem Gesenkblock (4) und der Platte (6) erstreckenden inneren Kernblock (12) und einer Einspritzvorrichtung, um heißes thermoplastisches Material in einen Gesenkhohlraum (18) einzuspritzen, wodurch ein mit dem offenen Ende des Rohres (3) thermoplastisch verbundener Rand (2) am Umfang geschaffen wird, dadurch gekennzeichnet, daß die Platte (6) eine in festgelegtem Abstand zum Gesenkblock (4) getragene Halteplatte ist, komplementäre äußere Kernblöcke (15) um den inneren Kernblock (12) zwischen dem Gesenkblock (4) und der Platte (6) verschiebbar angeordnet sind, Keilblöcke (20) jeweils zwischen den äußeren Kernblöcken (15) und der Platte (6) angeordnet sind und Klemmvorrichtungen (30) wahlweise und fortschreitend betreibbar sind, um die äußeren Kernblöcke (15) zusammen in eine geschlossene Stellung zu bewegen, wodurch das Rohr (3) so gegen den inneren Kernblock (12) geklemmt wird, daß sich ein offenes Ende des Rohres (3) in den Gesenkhohlraum (18) erstreckt, der durch die Kernblöcke (12, 15) begrenzt ist, wobei die Klemmvorrichtungen (30) ferner betreibbar sind, um die Keile der Keilblöcke (20) zwischen die Halteplatte (6) und die jeweiligen äußeren Kernblöcke (15) zu treiben, um die äußeren Kernblöcke so gegen den Gesenkblock (4) in der geschlossenen Stellung zu verkeilen, daß der Gesenkblock (4) und die Kernblöcke (12, 15) zusammen in der geschlossenen Stellung den Gesenkhohlraum (18) bilden.

2. Gerät nach Anspruch 1, ferner mit zwischen den äußeren Kernblöcken (15) und den jeweiligen Keilblöcken (20) angeordneten elastischen Druckgliedern (35).

3. Gerät nach Anspruch 1 oder 2, dadurch gekennzeichnet, daß die Klemmvorrichtungen (30) direkt auf den Keilblöcken (20) betreibbar sind.

4. Gerät nach einem der vorhergehenden Ansprüche, dadurch gekennzeichnet, daß die äußeren Kernblöcke (15) mit den jeweiligen Keilblöcken (20) durch Verbindungsglieder (38) verbunden sind, die eine gewisse relative Verschiebung der Keilblöcke (20) auf die Kernblöcke (15) zu aufnehmen können und die maximale relative Verschiebung der Keilblöcke (20) von den Kernblöcken (15) weg begrenzen.

5. Gerät nach Anspruch 4, dadurch gekennzeichnet, daß die Klemmvorrichtungen (30) in einer Lösephase betreibbar sind, um zuerst die Keilblöcke (20) zu lösen und zurückzuziehen und anschließend die jeweiligen äußeren Kernblöcke (15) durch die Verbindungsglieder (38) am Punkt maximaler relativer Verschiebung zurückzuziehen.

6. Gerät nach einem der vorhergehenden Ansprüche, zur Verwendung bei einem Rohr (3), das einen vom Gesenkhohlraum (18) entfernten vorgeformten Boden (51) aufweist, dadurch gekennzeichnet, daß das Gerät ferner einen Kanal (55) enthält, um durch den inneren Kernblock (12) unter Druck gesetztes Gas auf ein Öffnen des Gesenks hin in das Rohr (3) zu leiten, um das Rohr (3) aus dem Gerät auszuwerfen.

7. Gerät nach einem der vorhergehenden Ansprüche, ferner mit einer mit dem inneren Kernblock (12) verbundenen Innenhülse (50), um das entfernte Ende des Rohres (3) anzuordnen.

8. Gerät nach einem der vorhergehenden Ansprüche, dadurch gekennzeichnet, daß die Klemmvorrichtung (30) wechselseitig gegenüberliegende hydraulische Stellglieder (31, 32) aufweist, die auf gegenüberliegenden Seiten des Gesenks angeordnet sind und auf die jeweiligen Keilblöcke (20) einwirken können.

9. Gerät nach einem der vorhergehenden Ansprüche, dadurch gekennzeichnet, daß das thermoplastische Material durch eine an einem inneren Umfang des Gesenkhohlraums (18) angeordnete Düse (41) so eingespritzt werden kann, daß das thermoplastische Material dazu beiträgt, einen nach außen gerichteten Einspritzdruck auf das offene Ende des Rohres (3) auszuüben.

10. Gerät nach Anspruch 9, dadurch gekennzeichnet, daß die äußeren Kernblöcke (15) zusammen eine einwärts herabhängende Umfangsschulter (60) definieren, um einen radialen Träger für das offene Ende des Rohres (3) zu bilden und dadurch einer Verformung des Rohres unter dem nach außen gerichteten Einspritzdruck zu widerstehen.

11. Gerät nach einem der vorhergehenden Ansprüche, dadurch gekennzeichnet, daß jeder Keilblock (20) eine geneigte Keilfläche (23) aufweist, die so angeordnet ist, daß sie an einer entsprechend geneigten Gegenfläche (21) auf dem jeweiligen Kernblock (15) anliegt.

12. Gerät nach Anspruch 11, dadurch gekennzeichnet, daß die geneigten Flächen (21, 23) so angeordnet sind, daß dem Hauptteil der durch die Einspritzung des thermoplastischen Materials in den Gesenkhohlraum (18) auf die äußeren Kernblöcke (15) wirkenden Spannkräfte durch die Halteplatte (6) entgegengewirkt wird, so daß durch die Klemmvorrichtungen (30) nur einer relativ kleineren Kraftkomponente entgegengewirkt wird.

13. Gerät nach Anspruch 2 oder einem von ihm abhängigen Anspruch, dadurch gekennzeichnet, daß die elastischen Druckglieder (35) so angeordnet sind, daß sie anfangs die Keilblöcke (20) unmittelbar nach einem Lösen der Klemmvorrichtungen (30) aus einem Klemmeingriff mit den jeweiligen äußeren Kernblöcken (15) treiben.

14. Gerät nach einem der vorhergehenden Ansprüche, dadurch gekennzeichnet, daß der Gesenkblock (4) und die Halteplatte (6) jeweilige wechselseitig gegenüberliegende, im wesentlichen parallele Führungsflächen (5, 9) definieren, entlang denen die äußeren Kernblöcke (15) bzw. die Keilblöcke (20) als Antwort auf eine Betätigung der Klemmvorrichtungen (30) gleiten.

## Revendications

1. Dispositif pour former un rebord (2) sur un tube (3), la dispositif comportant un bloc (4) formant matrice, une plaque (6), un bloc (12) formant noyau intérieur s'étendant entre le bloc (4) formant matrice et la plaque (6), et des moyens d'injection pour injecter une matière thermoplastique chaude dans une cavité (18) de matrice en formant ainsi un rebord périphérique (2) fixé de manière thermoplastique à l'extrémité exposée du tube (3), caractérisé en ce que la plaque (6) est une plaque de blocage supportée en étant espacée de manière fixe par rapport au bloc (4) formant matrice, des blocs (15) formant noyau extérieur complémentaires sont disposés de manière coulissante autour du bloc (12) formant noyau intérieur entre le bloc (4) formant matrice et la plaque (6), des blocs formant coin (20) sont respectivement disposés entre les blocs (15) formant noyau extérieur et la plaque (6), et des moyens de serrage (30) peuvent être actionnés de manière sélective et progressive pour déplacer les blocs (15) formant noyau extérieur l'un vers l'autre dans une position fermée en serrant ainsi le tube (3) contre le bloc (12) formant noyau intérieur de sorte qu'une partie exposée du tube (2) s'étende dans la cavité de matrice (18), qui est délimitée par les blocs (12, 15) formant noyau, les moyens de serrage (30) pouvant de plus être actionnés pour entraîner les coins des blocs (20) formant coin entre la plaque de blocage (6) et les blocs (15) formant noyau extérieur respectifs pour coincer les blocs formant noyau extérieur contre le bloc (4) formant matrice dans la position fermée de telle sorte que le bloc (4) formant matrice et les blocs (12, 15) formant noyau,réunis dans la position fermée, forment la cavité de matrice (18).

2. Dispositif selon la revendication 1, comportant de plus des éléments de compression élastiques (38) disposés entre les blocs (15) formant noyau extérieur et les blocs (20) formant coin respectifs.

3. Dispositif selon la revendication 1 ou 2, dans lequel las moyens de serrage (30) peuvent être actionnés directement sur les blocs (20) formant coin.

4. Dispositif selon l'une quelconque des revendications précédentes, dans lequel les blocs (15) formant noyau extérieur sont reliés aux blocs (20) formant coin respectifs par des éléments de connexion (38) qui acceptent un degré de déplacement relatif des blocs (20) formant coin en direction des blocs (15) formant noyau et limitent le déplacement relatif maximum des blocs (20) formant coin les éloignant des blocs (15) formant noyau.

5. Dispositif selon la revendication 4, dans lequel les moyens de serrage (30) peuvent être actionnés dans une phase de libération tout d'abord pour libérer et rétracter les blocs (20) formant coin et ensuite pour rétracter les blocs (15) formant noyau extérieur respectifs par l'intermédiaire des éléments de liaison (38) au niveau du point de déplacement relatif maximum.

6. Dispositif selon l'une quelconque dos revendications précédentes, destiné à être utilisé avec un tube (3) qui comporte une base (51) préformée éloignée de la cavité de matrice (18), dans lequel le dispositif comporte de plus un passage (55) pour diriger du gaz sous pression à l'intérieur du tube (3) à travers le bloc (12) formant noyau intérieur lors de l'ouverture de la matrice pour éjecter le tube (3) du dispositif.

7. Dispositif selon l'une quelconque des revendications précédentes, comportant de plus un manchon intérieur (50) associé au bloc (12) formant noyau intérieur pour positionner l'extrémité du tube (3).

8. Dispositif selon l'une quelconque des revendications précédentes, dans lequel les moyens de serrage (30) comportent des actionneurs hydrauliques mutuellement opposés (31, 32) disposée sur des côtés opposés de la matrice et pouvant agir sur les blocs (20) formant coin respectifs.

9. Dispositif selon l'une quelconque des revendications précédentes, dans lequel la matière thermoplastique peut être injectée à travers une buse (41) disposée sur une périphérie intérieure de la cavité de matrice (18) de telle sorte que la matière thermoplastique a tendance à fournir une pression d'injection dirigée vers l'extérieur sur l'extrémité exposée du tube (3).

10. Dispositif selon la revendication 9, dans lequel les blocs (15) formant noyau extérieur étant réunis définissent un épaulement périphérique dépendant vers l'intérieur (60) pour fournir un support radial de l'extrémité exposée du tube (3) et ainsi résister à la déformation du tube sous la pression d'injection dirigée vers l'extérieur.

11. Dispositif selon l'une quelconque des revendications précédentes, dans lequel chaque bloc formant coin (20) comporte une surface inclinée (23) à effet de coin disposée pour venir en contact avec une surface complémentaire (21) inclinée de manière correspondante du bloc (15) formant noyau respectif.

12. Dispositif selon la revendication 11, dans lequel lesdites surfaces inclinées (21, 23) sont disposées de telle sorte que la majorité des forces de vérin agissant sur les blocs (15) formant noyau extérieur par l'injection de la matière thermoplastique dans la cavité de matrice (18) sont encaissées par la plaque de blocage (6), de sorte que seule une composante de force relativement plus petite est encaissée par les moyens de serrage (30).

13. Dispositif selon la revendication 2 ou selon l'une quelconque des revendications rattachées à celle-ci, dans lequel les éléments de compression élastiques (35) sont disposés initialement pour entraîner les blocs (20) formant coin à l'extérieur du contact de serrage avec les blocs (15) formant noyau extérieur respectifs immédiatement après libération des moyens de serrage (30).

14. Dispositif selon l'une quelconque des revendications précédentes, dans lequel le bloc (4) formant matrice et la plaque de blocage (6) définissent des surfaces de guidage (5, 9) respectives, à peu près parallèles, mutuellement opposées, le long desquelles les blocs (15) formant noyau extérieur et les blocs (20) formant coin coulissent respectivement en réponse à l'actionnement des moyens de serrage (30).
